# EUROPÄISCHE PATENTSCHRIFT

(11) **EP 1 493 520 B1**
(45) Veröffentlichungstag und Bekanntmachung des Hinweises auf die Patenterteilung: **15.09.2010**
(21) Anmeldenummer: 04014272.1
(22) Anmeldetag: 18.06.2004
(51) Int. Cl.: B23F 5/12, B23F 5/16

(54) **Wälz-Stoss-Maschine**
Generating slotting machine
Machine à mortaiser en développante

(30) Priorität: 04.07.2003 DE 10330129
(43) Veröffentlichungstag der Anmeldung: 05.01.2005
(73) Patentinhaber: ZEITLAUF GmbH antriebstechnik & Co.KG, 91207 Lauf/Pegnitz (DE)
(72) Erfinder: Grünig, Kurt, 2515 Préles (CH)
(74) Vertreter: Hübner, Gerd

(56) Entgegenhaltungen:
- GB-A- 1 431 610
- US-A- 3 722 359
- LANGE J: "INNOVATIVE CNC GEAR SHAPING" GEAR TECHNOLOGY, RANDALL PUBLISHING CO. ELK GROVE, ILLINOIS, US, Bd. 11, Nr. 1, Januar 1994 (1994-01), Seiten 16-29, XP000425630 ISSN: 0743-6858

## Beschreibung

Die Erfindung betrifft eine Wälz-Stoß-Maschine zur Herstellung von Zahnrädern mit den im Oberbegriff des Anspruches 1 angegebenen Merkmalen.

Auf dem Markt sind derartige Maschinen in vielfach unterschiedlichen Konstruktionen bekannt. Als funktionale Baugruppen weisen diese Maschinen ein Maschinengestell und eine im Maschinengestell an einer entsprechenden Lager- und Antriebseinrichtung angeordnete Stoßwelle auf. Letztere trägt ein vorzugsweise zahnradartiges Stoßwerkzeug und wird mittels der Lager- und Antriebseinrichtung zur Bearbeitung des Werkstückes in verschiedene, überlagerte Bewegungen gebracht. So ist grundsätzlich eine Stoß- und Rückhubbewegung des Stoßwerkzeuges in längsaxialer Richtung der Stoßwelle vorzusehen, wobei sich mit jedem Stoßzyklus das Stoßwerkzeug tiefer in den Zahnradrohling einarbeitet. Die entsprechende Zustellbewegung wird in der Regel durch die Werkstücklagerung vorgenommen.

Während der Stoß- und Rückhubbewegung kann das Stoßwerkzeug eine Drallbewegung um die Längsachse der Stoßwelle vollführen. Diese ist beispielsweise für herzustellende Schrägverzahnungen vorzusehen, kann jedoch bei der Herstellung von Zahnrädern mit achsparallelen Zähnen unterdrückt werden, ist insofern also nicht zwingend.

Um das Stoßwerkzeug während des Rückhubes vom Werkstück abzuheben, muss es dabei eine laterale Auslenkbewegung vollführen.

Schließlich sind Werkstück und Werkzeug in der Regel beides Zahnräder, wobei während der Fertigung eine Abwälzbewegung von Werkstück und Werkzeug zueinander stattfindet. Hierzu ist eine Wälzbewegung der Stoßwelle um ihre Längsachse, mit anderen Worten eine Drehung der Stoßwelle um ihre eigene Achse, vorzusehen, die auf die Drehung des Werkstücks abgestimmt ist.

Bekannte Wälz-Stoß-Maschinen werden bisher in der Regel zur Herstellung großer Getriebezahnräder eingesetzt. Daher weist der Stoßkopf bei solchen vorbekannten Wälz-Stoß-Maschinen eine große Masse auf. Insoweit wird nur eine relativ beschränkte Repetierrate für das Stoßwerkzeug in der Größenordnung von 600 bis 1200 Doppelhüben pro Minute erreicht.

Der nächstkommende Stand der Technik ist in der US-A-3 722 3 59 bzw. der GB-A-1 431 610 offenbart, wonach ein Stoßwellen-Lagerträger als Teil der Antriebs- und Lagereinrichtung vorgesehen ist, in dem die Stoßwelle mittels eines Antriebes in ihrer Stoß- und Rückhubbewegung sowie gegebenenfalls Drallbewegung antreibbar gelagert ist. Ferner ist der Stoßwellen-Lagerträgcr zur Erzeugung der Wälzbewegung der Stoßwelle durch einen Drehantrieb in Drehbewegung versetzbar. Schließlich ist der Stoßwellen-Lagerträger in einer angetriebenen Schwenklager-Auflaätigung in Radialrichtung quer zur Längsachse zur Erzeugung der lateralen Auslenkbewegung beweglich gelagert.

Bei der vorstehenden Konstruktion vollführt die Stoßwelle lediglich die eigentliche Stoß- und Rückhubbewegung und ggf. eine vorzusehende Drallbewegung. Die weiteren Freiheitsgrade des Stoßwerkzeuges werden durch den separaten Stoßwellen-Lagerträger erzeugt. Die einzelnen Bewegungs-Freiheitsgrade des Stoßwerkzeuges sind damit hinsichtlich der sie hervorrufenden Maschinenelemente entkoppelt, wodurch die Stoßwelle als solche mit einer geringen Masse auskommt.

Erfahrungsgemäß sind Wälz-Stoß-Maschinen des Konzeptes, wie es aus den vorstehend erörterten, vergleichsweise alten Druckschriften bekannt ist, hinsichtlich ihrer Präzision nicht auf die aktuellen Anforderungen zugeschnitten.

Davon ausgehend liegt der Erfindung die Aufgabe zugrunde, eine Wälz-Stoß-Maschine so zu verbessern, dass bei universeller Einsetzbarkeit hinsichtlich der Verzahnungsart der damit herstellbaren Zahnräder eine höhere Bearbeitungsgoschwindigkeit insbesondere zur präzisen Herstellung filigranerer Zahnräder erzielbar ist.

Diese Aufgabe wird durch die im Kennzeichnungsteil des Anspruchs 1 angegebenen Merkmale gelöst. Ein wesentliches Merkmal der Erfindung ist demnach die Schwenklager-Aufhängung des Stoßwellen-Lagerträgers, die durch sogenannte Aufhängeplatten bzw. einen Aufhängering realisiert ist. Diese vorzugweise aus Fedezstaba-Lamellen packetierten Lagerelement sind auf die zuzulassende Schwenkbewegung des Stoßwellen-Lagerträgers optimal zugeschnitten. So sind die Aufhängeplatten in ihrer Plattenebene besonders steif, senkrecht dazu jedoch bei entsprechender Beaufschlagung problemlos auslenkbar. Dies bedeutet, dass die Aufhängeplatten eine Schenkbewegung in einer sehr definierten Schwenkebene ermöglichen. Auch sind mit der erfindungsgemäßen Maschine beispieisweise 6000 Doppelhübe des Stoßwerkzeuges pro Minute erreichbar, was eine Verbesserung gegenüber dem Stand der Technik um den Faktor 5 bis 10 darstellt.

Die Aufhängeringscheibe wiederum stellt einerseits aufgrund ihrer hohen Positionierwirkung in der Scheibenebene eine saubere Positionierung des Stoßwellen-Lagerträgers zur Verfügung, wobei zur Rundrichtung der Stoßwelle die Aufhängeringscheibe vorzugsweise an einem entsprechenden Einstellring montiert sein kann. Zum anderen weist die Lagerung an einer Aufhängeringscheibe keine Vorzugsrichtung bezüglich einer Verschenkung des Stoßwellen-Lagertxägers in eine bestimmte Radialrichtung bezüglich der Stoßwellen-Langsachse auf. Insoweit lässt die Aufhängeringscheibe eine Schwenkbewegung des Stoßwellen-Lagerträgers um Schwenkachsen in allen Radialrichtungen zu sich selbst zu.

Bevorzugtermaßen sind die Lagerungen des Stoßwellen-Lagerträgers in der Lagerbüchse und der Stoßwelle im Stoßwellen-Lagerträger hydrostatischer Natur. Auch der Schwenkantrieb der Lagerbüchse zur Erzeugung der Auslenkbewegung während des Stoßwellen-Rückhubes und der Antrieb der Stoßwelle selbst sind hydraulisch ausgelegt, wobei zur Ansteuerung der entsprechenden Kolben-Zylinder-Einheiten entsprechend hochfrequent arbeitende Hydraulikventile eingesetzt werden.

Weitere Merkmale, Einzelheiten und Vorteile der Erfindung sind der nachfolgenden Beschreibung entnehmbar, in der ein Ausführungsbeispiel der Erfindung anhand der beigefügten Zeichnungen näher erläutert wird. Es zeigen:
- Fig. 1: einen Axialschnitt durch eine Wälz-Stoß-Maschine,
- Fig. 2: einen Schnitt entlang der Linie B-B gemäß Fig. 1 sowie

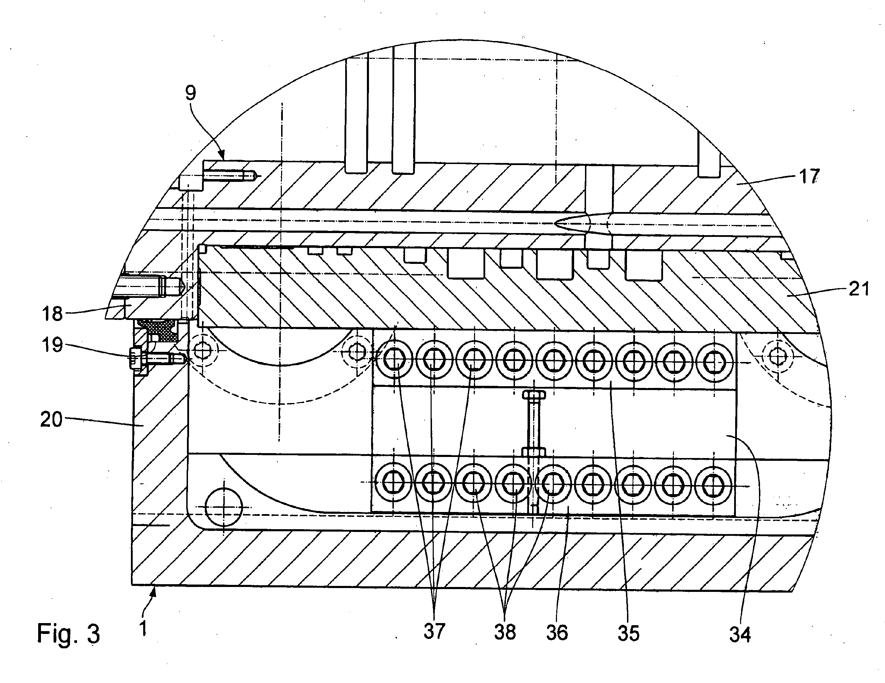

- Fig. 3 und 4: vergrößerte Detailschnitte der Einzelheiten Y und Z gemäß Fig. 1.

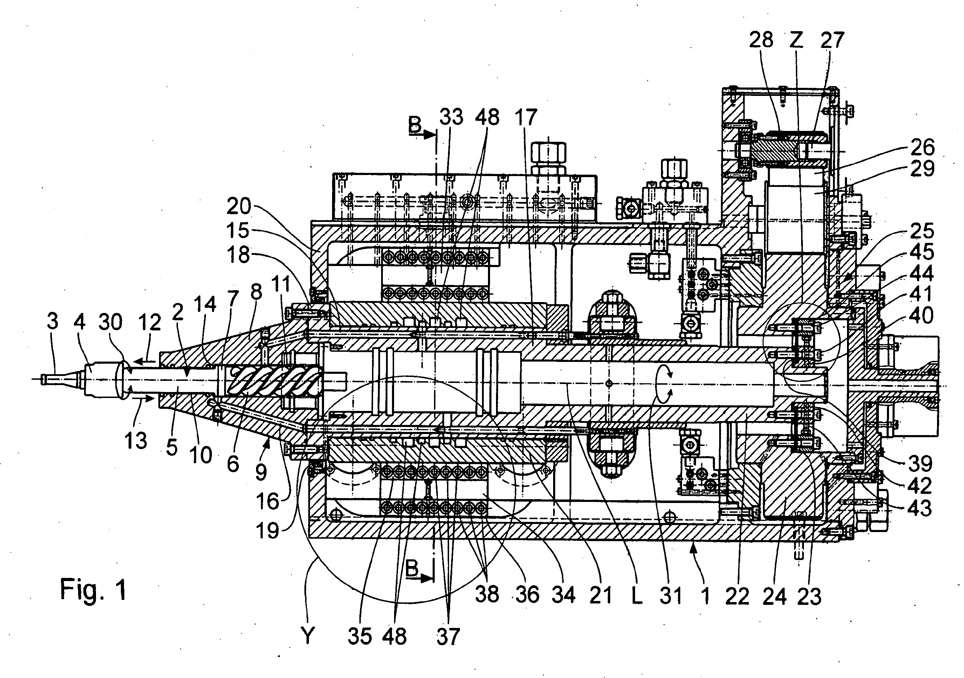

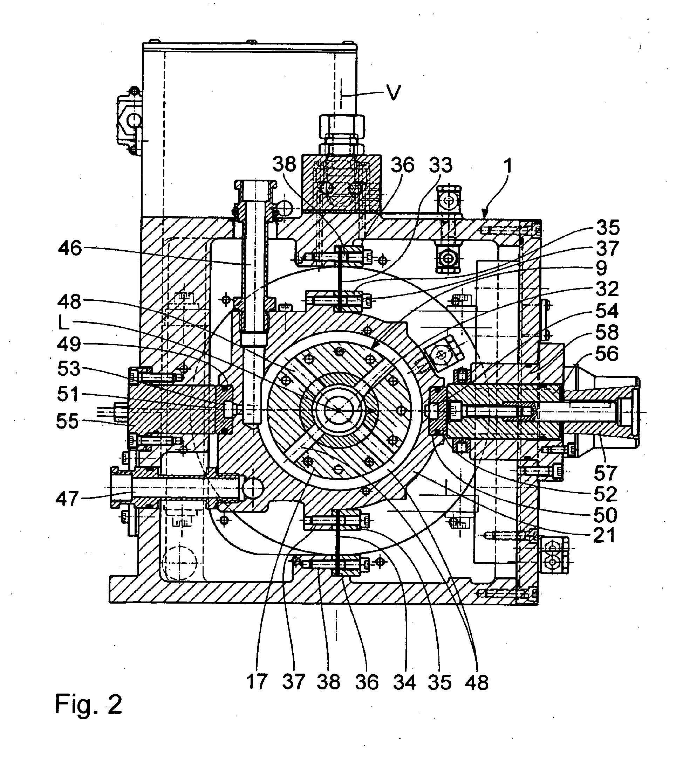

Wie in den Fig. 1 und 2 dargestellt ist, weist eine Wälz-Stoß-Maschine ein Maschinengestell auf, das im Wesentlichen als kastenförmiges Gehäuse 1 ausgebildet ist. Darin ist über eine noch näher zu erörternde Lager- und Antriebseinrichtung eine Stoßwelle 2 in verschiedenen Richtungen beweglich und angetrieben gelagert, um mit einem kopfseitig an der Stoßwelle 2 sitzenden Stoßwerkzeug 3 durch eine repetierende Stoßbewegung an einem nicht näher dargestellten Zahnradrohling als Werkstück durch allmähliches Einarbeiten entlang des Verzahnungsumfanges ein Zahnprofil zu erstellen. Es kann sich dabei um alle Arten von Verzahnungsgeometrien, wie eine Stirn-, Innen-, Kegelrad-, Schräg- und insbesondere auch Planradverzahnung handeln.

Über eine nicht näher dargestellte Spannvorrichtung 4 ist das Stoßwerkzeug 3 auswechselbar am Kopf des Schaftes 5 der Stoßwelle 2 gehalten. Der Schaft 5 selbst weist an seinem dem Stoßwerkzeug 3 abgewandten, hinteren Ende ein Drallwendelprofil 6 auf, das zur Mitte des Schaftes 5 hin durch eine Kolbenschulter 7 begrenzt wird.

Die Stoßwelle 2 ist im Führungskopf 8 eines als Ganzes mit 9 bezeichneten Stoßwellen-Lagerträgers in einer entsprechenden Führungsbohrung 10 entlang der zentralen Werkzeuglängsachse L hin- und herverschiebbar sowie darin drehbar gelagert. In das Drallwendelprofil 6 greift dabei ein entsprechend profilierter Dichtkörper 10 ein, sodass bei einer Stoßhubbewegung (Pfeil 12) bzw. Rückhubbewegung (Pfeil 13) der Stoßwelle 2 gleichzeitig eine Drehbewegung 30 um deren Längsachse L bedingt durch den Eingriff von Dichtkörper 11 und Drallwendelprofil 6 stattfindet. Die Stoß- und Rückhubbewegungen 12, 13 werden hydraulisch durch eine entsprechend wechselseitig gesteuerte Beaufschlagung der Räume zwischen Dichtkörper 11 und Kolbenschulter 7 einerseits und Kolbenschulter 7 und Anschlagschulter 14 andererseits in der Führungsbohrung 10 erzeugt. Das Druckfluid wird dabei über entsprechend im Führungskopf 8 ausmündende Druckleitungen 15, 16 unter Steuerung durch ein entsprechendes Mehrwegeventil im Trägerschaft 17 des Stoßwellen-Lagerträgers 9 bereitgestellt.

Wie aus Fig. 1 deutlich wird, sitzt der Führungskopf 8 an einem das Gehäuse des Maschinengehäuses 1 durchquerenden rohrähnlichen Trägerschaft 17, dessen stoßwerkzeugseitiges Ende als Flansch 18 zur Anbindung des Führungskopfes 8 ausgebildet ist. Der Flansch 18 liegt abgedichtet, aber mit Spiel in einer Durchgangsöffnung 19 der Wand 20 des Maschinengehäuses 1.

Der Stoßwellen-Lagerträger 9 ist mit seinem Trägerschaft 17 im Bereich etwa von der Mitte bis zum Flansch 18 in einer Lagerbüchse 21 drehbar um die Längsachse L gelagert. Diese Drehbewegung stellt die der Drallbewegung der Stoßwelle 2 überlagerte Wälzbewegung des Stoßwerkzeuges 3 zur Verfügung. Der Trägerschaft 17 ist dabei über eine nicht näher gestellte hydrostatische Lagerung in der Lagerbüchse 21 drehgelagert.

Als Drehantrieb für den Stoßwellen-Lagerträger 9 und damit die Stoßwelle 2 zur Erzeugung der Wälzbewegung 31 ist das stoßwerkzeugabseitige Ende 22 des Trägerschaftes 17 in noch näher zu beschreibender Weise koaxial in einer Riemenscheibe 24 montiert, die in einer am Maschinengehäuse 1 angebrachten Lagerdeckel-Baugruppe 25 drehbar gelagert ist. Diese Riemenscheibe 24 wird von einem Zahnriemen 26 angetrieben, der über ein auf der Abtriebswelle 27 eines nicht näher gestellten Antriebsmotores sitzendes Antriebsritzel 28 sowie eine Spannrolle 29 läuft.

Neben der bereits beschriebenen Stoß- und Rückhubbewegung 12, 13 der bei Stoß- und Rückhub in entgegengesetzter Richtung weisenden Drallrotation 30 der Stoßwelle 2 im Führungskopf 8 und der während der gesamten Werkzeugherstellung in eine gleichbleibende Drehrichtung weisenden Wälzrotation 31 aufgrund der Drehbewegung des Stoßwellen-Lagerträgers 9 muss das Stoßwerkzeug 3 für bestimmte Bearbeitungsaufgaben auch noch eine laterale Auslenkbewegung während der Rückhubbewegung 13 vollführen. Diese Auslenkbewegung weist senkrecht zur Längsachse L (entsprechend senkrecht zur Papierebene von Fig. 1) und kann durch eine minimale Schwenkbewegung 32 (Fig. 2) der Lagerbüchse 21 im Maschinengehäuse 1 um eine im Bereich des Endes 22 des Trägerschaftes 17 liegende Schwenkachse bereitgestellt werden. Dazu ist die Lagerbüchse 21 etwa mittig bezogen auf ihre Länge über blattfederartige Aufhängeplatten 33, 34 mit dem Maschinengehäuse 1 verbunden. Das Paar von Aufhängeplatten 33, 34 ist radial bezüglich der Längsachse L gegenüberliegend vertikal oben und unten angeordnet. Dazu sind die langgestreckt rechteckigen Aufhängeplatten 33, 34 mit ihrem der Lagerbüchse 21 zugewandten Rand jeweils durch einen Niederhalter 35, 36 über Schrauben 37 eingespannt. Desgleichen sind die dem Maschinengehäuse 1 zugewandten Ränder über Niederhalter 36 und entsprechende Schrauben 38 am Maschinengehäuse 1 eingespannt. Die gezeigten Aufhängeplatten 33, 34, die in einer gemeinsamen, durch die Längsachse L verlaufenden Vertikalebene V angeordnet sind, bieten in dieser Ebene eine hohe Steifigkeit und damit eine sehr stabile Lagerung. Rechtwinklig zur Vertikalebene V hingegen erlaubt diese Lagerung die gewünschte Schwenkbewegung 32, für die unter praktischen Gesichtspunkten eine Amplitude von Bruchteilen eines Millimeters bis maximal etwa einen Millimeter genügt.

Das hintere Ende 22 des Stoßwellen-Lagerträgers 9 ist nun in einer vom Prinzip her ähnlichen Aufhängung in Form der Aufhängeringscheibe 23 gelagert. Diese ist mit ihrem inneren Rand 39 über einen Einstellring 40 mittels Schrauben 41 an der rückwärtigen Stirnseite 42 des Trägerschaftes 17 befestigt. Quer zu diesen axialen Schrauben 41 verlaufen radiale Stellschrauben 43, mit deren Hilfe der Einstellring 40 in seiner Lage feinjustiert und damit die Stoßwelle 2 mit ihrem Stoßwerkzeug 3 exakt rundgerichtet werden kann.

An seinem radialen Außenrand ist die Aufhängeringscheibe 23 wiederum durch axiale Schrauben 44 mit der Riemenscheibe 24 unter Zwischenlage eines Niederhalterrings 45 befestigt. Da die Aufhängeringscheibe 23 wiederum in ihrer Ringebene selbst sehr stabil ist, ist eine saubere Radialposition der Stoßwelle 2 gewährleistet. Zur Bereitstellung der Schwenkbewegung 32 am stoßwerkzeugseitigen Ende des Trägerschaftes 17 kann nun der Trägerschaft 17 um jede beliebige radiale, in der Ringebene liegende Schwenkachse durch entsprechende Verwindung der Aufhängeringscheibe 23 quer zu ihrer Ringebene ausgelenkt werden.

Zur Erzeugung der Schwenkbewegung 32 ist ein hydraulischer Antrieb vorgesehen, der anhand von Fig. 2 zu erläutern ist. Über durch das Maschinengehäuse 1 von oben bzw. von der Seite her eingeführte Anschlussstutzen 46, 47 kann das Hydraulikfluid eines hydraulischen Antriebes in die Lagerbüchse 21 eingeleitet und wieder daraus abgeleitet werden. Über innere Kanäle 48 mit entsprechenden Ventilfunktionen werden die Bewegungen 12, 13, 30 der Stoßwelle 2 im Stoßwellen-Lagerträger 9 sowie die Schwenkbewegung 32 der Lagerbüchse 21 erzeugt. Letztere weist an ihrer Außenseite an horizontal und radial gegenüberliegenden Positionen jeweils eine Ausnehmung 49, 50 auf, in die zwei kolbenzylinderartige Anschlagstücke 51, 52 unter Bildung eines Arbeitsraumes 53, 54 eingreifen.

Das Anschlagstück 51 stützt sich an einem festen, im Maschinengehäuse 1 montierten Anschlagbolzen 55 ab und bildet damit den Festanschlag, der die laterale Position der Längsachse L während des Stoßhubes 12 definiert.

Das gegenüberliegende Anschlagstück 52 stützt sich an einem Verstellanschlag 56 ab, der über einen Drehknopf 57 in seiner Radialposition verstellbar in einer Führungsmuffe 58 im Maschinengehäuse 1 gelagert ist. Der Verstellanschlag 56 ist dabei so fein verstellbar, dass zwischen dem Anschlagstück 52 und dem Verstellanschlag 56 "Luft" von Bruchteilen von Millimetern bis etwa ein Millimeter eingestellt werden kann. Es werden nun über die im Einzelnen nicht näher dargestellten Kanäle 48 die beiden Arbeitsräume 53, 54 wechselseitig mit Druckfluid versorgt. Wird der bezogen auf Fig. 2 rechte Arbeitsraum 54 druckbeaufschlagt, so stellt sich die Lagerbüchse 21 in ihre Position zur Durchführung eines Stoßhubes unter Anlage des Anschlagstückes 51 an dem links gelegenen Anschlagbolzen 55 ein. Nach Durchführung des Stoßhubes 12 wird der linke Arbeitsraum 53 mit Druckfluid beaufschlagt und der rechte Arbeitsraum 54 entlastet, sodass die Lagerbüchse 21 aufgrund des Schwenkfreiheitsgrades durch die Aufhängeplatten 33, 34 nach rechts bezogen auf Fig. 2 um eine minimale Auslenkung verlagert wird, bis das Anschlagstück 52 am Verstellanschlag 56 anliegt. In dieser Position kann das Stoßwerkzeug 3 seinen Rückhubbewegung 13 vollführen, ohne dass es in Eingriff mit dem Werkstück kommt. Während dieser hin- und hergehenden Schwenkbewegung 32 dreht sich der Stoßwellen-Lagerträger 9 bedingt durch den Zahnriemenantrieb am hinteren Ende des Trägerschaftes 17 um die Längsachse L, sodass die in der Aufhängeringscheibe 23 definierte Schwenkachse um ihren Schnittpunkt mit der Längsachse der Stoßwelle 2 auf der Aufhängeringscheibe 23 relativ zu dieser rotiert.

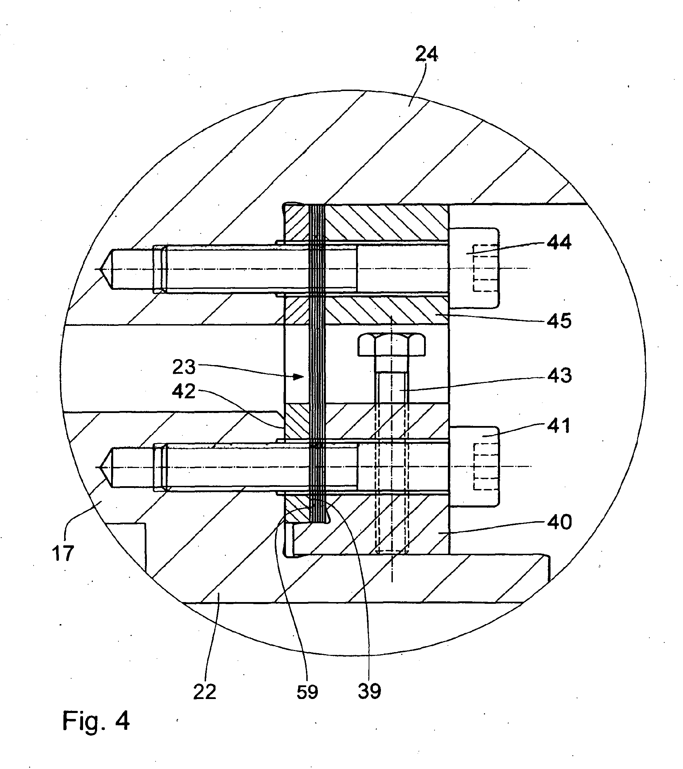

Wie aus Fig. 4 hervorgeht, ist die Aufhängeringscheibe 23 - genauso wie in nicht näher dargestellter Weise die Aufhängeplatten 33, 34 - aus einem Paket von Federstahl-Lamellen 59 gebildet.

Die in den Fig. 1 und 2 noch dargestellten, nicht jedoch näher bezeichneten Anschlussstutzen und Maschinenelemente bedürfen keiner näher Erörterung, da sie in an sich bekannter Weise der Realisierung hydrostatischer Lager innerhalb der zueinander beweglichen Maschinenteile dienen.

## Patentansprüche

1. Wälz-Stoß-Maschine zur Herstellung von Zahnrädern umfassend
- ein Maschinengestell (1),
- eine im Maschinengestell (1) an einer Langer- und Antriebseinrichtung angeordnete Stoßwelle (2), die ein vorzugsweise zahnradartiges Stoßwerkzeug (3) trägt und mittels der Antriebs- und Lagereiurichtung überlagert vollführt
= eine Stoß- und Rückhubbewegung (12, 13) in Längsaxialrichtung (L),
= gegebenenfalls eine Drallbewegung (30) während der Stoß- und Rückhubbewegung (12, 13) um ihre Längsachse (L),
= eine laterale Auslenkbewegung (32) während der Rückhubbewegung (13), und
= eine Wälzbewegung (31) um ihre Längsachse (L), und
- einen Stoßwellen-Lagerträger (9) als Teil der Antriebs- und Lagereinrichtung,
= in dem die Stoßwelle (2) mittels eines Antriebes (6, 11) in ihrer Stoß- und Rückhubbewegung (12, 13) sowie gegebenenfalls Drallbewegung (30) antreibbar gelagert ist,
= der zur Erzeugung der Wälzbewegung (31) der Stoßwelle (2) durch einen Drehantrieb (24, 26, 27, 28) in Drehbewegung versetzbar ist, und
= der in einer angetriebenen Schwenklager-Aufhängung (21, 23, 33, 34) in Radialrichtung quer zur Längsachse (L) zur Erzeugung der lateralen Auslenkbewegung (32) beweglich gelagert ist, **dadurch gekennzeichnet dass** die Schwenklager-Aufhängung einerseits eine den Stoßwellcn-Lagenräger (9) drehbar lagernde Lagerbüchse (21), die über blattfederartige Aufhängeplatten (33, 34) schwenkbar am Maschinengestell (1) befestigt ist, und andrerseits eine elastische, tellerfederartige Aufhängeringscheibe (23) um den Stoßweßen-Lagerträger (9) aufweist, welche Aufhängeringscheibe (23) eine Schwenkbewegung (32) des Stoßwellen-Lagerträgers (9) um Schwenkachsen in allen Radialrichtangen bezüglich sich selbst zulässt.

2. Wälz-Stoß-Maschine nach Anspruch 1, **dadurch gekennzeichnet, dass** die Aufhängeplatten (33, 34) als Paar radial gegenüberliegend zwischen Lagerbüchse (21) und Maschinengestell (1) angeordnet sind.

3. Wälz-Stoß-Maschine nach Anspruch 1 oder 2, **dadurch gekennzeichnet, dass** die Aufhängeplatten (33, 34) und/oder die Aufhangeringscheibe (23) aus paketierten Federlamellen (59) zusammengesetzt sind.

4. Wälz-Stoß-Maschine nach einem der Ansprüche 1 bis 3, **dadurch gekennzeichnet, dass** die Lagerbüchse (21) zwischen zwei am Maschinengestell (1) angebrachten, kolbenzylinderartigen Anschlägen (51, 52) begrenzt schwenkbar hydraulisch angetrieben ist.

5. Walz-Stoß-Maschine nach einem der Ansprüche 1 bis 4, **dadurch gekennzeichnet, dass** der Stoßwellen-Lagerträger (9) in der Lagerbüchse (21) hydrostatisch gelagert ist.

6. Wälz-Stoß-Maschine nach Anspruch 1, **dadurch gekennzeichnet, dass** die Aumängeringscheibe (23) der Schwenklager-Aufhängung in den Drehantrieb (24) für den Stoßwellen-Lagerträger (9) integriert ist.

7. Wälz-Stoß-Maschine nach Anspruch 6, **dadurch gekennzeichnet, dass** die Aufhängeringscheibe (23) konzentrisch in die Antriebsscheibe (24) einer Motor-Getriebe-Anordnung (24, 26, 27) eingebaut ist.

8. Wälz-Stoß-Maschine nach Anspruch 7, **dadurch gekennzeichnet, dass** zur Rundrichtung der Stoßwelle (2) die Aufhängeringscheibe (23) an einem in seiner Radialposition zur Längsachse (L) veränderlichen Einstellring (40) montiert ist.

## Claims

1. Gear shaping machine for producing gear wheels comprising
- a machine frame (1)
- a impulse shaft (2) arranged in the machine frame (1) on a bearing and drive device, which shaft supports a preferably gearwheel-like impulse shaft (3) and by means of the drive and bearing device executes in a superimposed manner
= a impulse and return stroke movement (12, 13) in longitudinal axial direction (L),
= if necessary a twisting movement (30) during the impulse and return stroke movement (12, 13) about its longitudinal axis (L),
= a lateral deflection movement (32) during the return stroke movement (13) and
= a rolling movement (31) about its longitudinal axis (L) and
- an impulse shaft bearing support (9) as part of the drive and bearing device,
= in which the impulse shaft (2) is mounted to be driven by a drive (6, 11) in its impulse and return stroke movement (12, 13) and if necessary a twisting movement (30),
= which for generating the rolling movement (31) of the impulse shaft (2) can be set by a rotary drive (24, 26, 27, 28) in rotational movement and
= which is mounted movably in a driven pivot bearing suspension (21, 23, 33, 34) in radial direction perpendicular to the longitudinal axis (L) for generating the lateral deflection movement (32),
**characterised in that** the pivot bearing suspension comprises on the one hand a bearing bush (21) rotatably mounting the impulse shaft bearing support (9), which bearing bush is secured by leaf-spring-like suspension plates (33, 34) pivotably on the machine frame (1) and on the other hand comprises an elastic, disc-spring-like suspension ring wheel (23) about the impulse shaft bearing support (9), which suspension ring wheel (23) allows a pivot movement (32) of the impulse shaft bearing support (9) about pivot axes in all radial directions in relation to itself.

2. Gear shaping machine according to claim 1, **characterised in that** the suspension plates (33, 34) are arranged as a pair radially opposite one another between the bearing bush (21) and machine frame (1).

3. Gear shaping machine according to claim 1 or 2, **characterised in that** the suspension plates (33, 34) and/or the suspension ring wheel (23) are composed of packeted spring lamellae (59).

4. Gear shaping machine according to one of claims 1 to 3, **characterised in that** the bearing bush (21) is hydraulically driven pivotably in a restricted manner between two piston-cylinder-like stops (51, 52) arranged on the machine frame (1).

5. Gear shaping machine according to one of claims 1 to 4, **characterised in that** the impulse bearing support (9) is mounted hydrostatically in the bearing bush (21).

6. Gear shaping machine according to claim 1, **characterised in that** the suspension ring wheel (23) of the pivot bearing suspension is integrated into the rotary drive (24) for the impulse shaft bearing support (9).

7. Gear shaping machine according to claim 6, **characterised in that** the suspension ring wheel (23) is installed concentrically into the drive wheel (24) of a motor gear arrangement (25, 26, 27).

8. Gear shaping machine according to claim 7, **characterised in that** for the round direction of the impulse shaft (2) the suspension ring wheel (23) is mounted on an adjusting ring (40) which can be changed in its radial position relative to the longitudinal axis (L).

## Revendications

1. Machine à raboter en développante pour la fabrication de roues d'engrenage, comprenant
- un bâti de machine (1),
- un arbre de percussion (2) disposé sur un dispositif de suspension et d'entraînement dans le bâti de machine (1), lequel supporte un outil de percussion (3) préférentiellement en forme de roue dentée et qui exécute en superposition au moyen du dispositif d'entraînement et de suspension
= un mouvement de percussion et de retrait (12, 13) en direction axiale longitudinale (L), = le cas échéant un mouvement giratoire (30) autour de son axe longitudinal (L) pendant le mouvement de percussion et de retrait (12, 13),
= un mouvement de déviation latérale (32) pendant le mouvement de retrait (13), et
= un mouvement de roulement (31) autour de son axe longitudinal (L), et
- un support de palier d'arbre de percussion (9) en tant que pièce du dispositif d'entraînement et de suspension,
= dans lequel l'arbre de percussion (2) est monté de manière à être mis en mouvement de percussion et de retrait (12, 13) et giratoire (30) le cas échéant au moyen d'un entraînement (6, 11),
= lequel peut être mis en mouvement de rotation par un entraînement rotatif (24, 26, 27, 28) pour générer le mouvement de roulement (31) de l'arbre de percussion (2), et
= lequel est monté dans une suspension à palier pivotant entraînée (21, 23, 33, 34) de manière à être mobile en direction radiale perpendiculairement à l'axe longitudinal (L) pour générer le mouvement de déviation latérale (32).
**caractérisée en ce que** la suspension à palier pivotant comporte d'une part un coussinet (21) recevant le support de palier d'arbre de percussion (9) libre en rotation, lequel est fixé de manière à pouvoir pivoter sur le bâti de machine (1) au moyen de plaques de suspension (33, 34) en forme de ressorts à lame, et d'autre part une rondelle annulaire de suspension (23) élastique en forme de rondelle-ressort autour du support de palier d'arbre de percussion (9), ladite rondelle annulaire de suspension (23) permettant un mouvement de pivotement (32) du support de palier d'arbre de percussion (9) autour d'axes de pivotement dans toutes les directions radiales par rapport à elle-même.

2. Machine à raboter en développante selon la revendication 1, **caractérisée en ce que** les plaques de suspension (33, 34) sont disposées par paire et radialement opposées entre le coussinet (21) et le bâti de machine (1).

3. Machine à raboter en développante selon la revendication 1 ou la revendication 2, **caractérisée en ce que** les plaques de suspension (33, 34) et/ou la rondelle annulaire de suspension (23) sont constituées de lamelles de ressort empilées (59).

4. Machine à raboter en développante selon l'une des revendications 1 à 3, **caractérisée en ce que** le coussinet (21) est entraîné hydrauliquement en pivotement limité entre deux butées (51, 52) en forme de cylindre à piston appliquées sur le bâti de machine (1).

5. Machine à raboter en développante selon l'une des revendications 1 à 4, **caractérisée en ce que** le support de palier d'arbre de percussion (9) est à suspension hydrostatique dans le coussinet (21).

6. Machine à raboter en développante selon la revendication 1, **caractérisée en ce que** la rondelle annulaire de suspension (23) de la suspension à palier pivotant est intégrée à la poulie d'entraînement (24) pour le support de palier d'arbre de percussion (9).

7. Machine à raboter en développante selon la revendication 6, **caractérisée en ce que** la rondelle annulaire de suspension (23) est montée concentriquement dans la poulie d'entraînement (24) d'un dispositif d'engrenage à moteur (24, 26, 27).

8. Machine à raboter en développante selon la revendication 7, **caractérisée en ce que**, pour la direction circulaire de l'arbre de percussion (2), la rondelle annulaire de suspension (23) est montée sur une bague de réglage (40) de position radiale variable par rapport à l'axe longitudinal (L).
